# EUROPEAN PATENT APPLICATION

(11) **EP 0 765 790 A2**
(43) Date of publication of application: **02.04.1997**
(21) Application number: 96307000.8
(22) Date of filing: 26.09.1996
(51) Int. Cl.: B60T 13/68

(54) **Pneumatic relay valve**

(30) Priority: 26.09.1995 GB 9519578
(71) Applicant: GRAU LIMITED, Redditch, Worcestershire B98 9HA (GB)
(72) Inventor: Broome, William Sidney, Inkberrow, Worcestershire WR7 4EJ (GB)
(74) Representative: Leach, John Nigel

(57) **Abstract**

A relay valve comprising a main valve responsive to the pressure of a pneumatic control signal in a control chamber of the main valve to supply air at a pressure which is dependent upon the pressure of the control signal and electrically operable valve means to control the pressure of the control signal characterised in that the electrically operable valve means controls the pressure of the control signal in proportion to the electrical power supplied to the electrically operable valve means.

## Description

This invention relates to a pneumatic relay valve comprising a main valve responsive to the pressure of a pneumatic control signal in a control chamber of the main valve to supply air at a pressure which is dependent upon the pressure of the control signal. Such a relay valve is commonly used in pneumatic brake systems for vehicles to control the supply of air from a source of air under pressure to at least one brake actuator of the vehicle to brake the vehicle.

The control signal may originate at a driver operated brake control comprising a driver operated valve to control pressure of air from a source to provide the control signal. When the vehicle is provided with an anti-skid system (ABS) the control signal is modulated by an electrically operable anti-skid valve means.

Alternatively the vehicle may have an electronically controlled brake system (EBS). In this case the control signal originates at an electrically operable valve means where pressure of air from a source is modulated by the electrically operable valve means in accordance with an electrical driver demand signal provided indirectly or directly by a driver operated brake control.

The EBS electrically operable valve means may also provide an ABS facility or additional anti-skid electrically operable valve means may be provided.

The electrically operable valve means, whether EBS and/or ABS, have hitherto comprised at least two solenoid valves, one of which either permits or interrupts passage of the control signal and the other of which either permits passage of the control signal or exhausts the control signal to a low pressure region.

Pressure of the control signal is modulated by electrically operated valve means by appropriate cyclic operation of the solenoids. Such cyclic operation of the solenoids and consequent stepwise adjustment of the control signal pressure suffers from the disadvantage that the stepping on-off action results in excessive wear and the solenoids have difficulty in maintaining the steps small enough to make fine adjustments.

An object of the invention is to provide a relay valve whereby the above mentioned disadvantages are overcome or are reduced.

According to one aspect of the invention we provide a relay valve comprising a main valve responsive to the pressure of a pneumatic control signal in a control chamber of the main valve to supply air at a pressure which is dependent upon the pressure of the control signal and electrically operable valve means to control the pressure of the control signal.

The electrically operable valve means may control the pressure of the control signal in proportion to the electrical power supplied to the electrically operable valve means.

The electrically operable valve means may comprise a valve member movable in response to an electro-magnetic force and said movement being opposed by a force dependent on the pressure of the control signal in the control chamber.

The valve member may be in force transmitting relationship with one side of a diaphragm, the other side of the diaphragm being in communication with the control signal.

The other side of the diaphragm may provide a part of a wall of the control chamber.

The valve member may have an end surface to which said pressure dependent force is applied.

The valve member may comprise an armature of a solenoid.

The armature may be movable axially relative to a coil of the solenoid within which the armature is slidably disposed.

Movement of the valve member may be adapted to control flow of control air from a source thereof to the control chamber and may be adjusted to control flow of control air from the control chamber to exhaust.

The valve member may be movable between a first position, occupied when the electrically operable valve is de-energised or the pressure dependent force is greater than the electro-magnetic force, in which the control chamber is connected to exhaust, a second position, occupied when the electrically operated valve is energised and the electro-magnetic force is balanced by the pressure dependent force and in which the control chamber is isolated from exhaust and from a source of control signal pressure and a third position, occupied when the electro-magnetic force is greater than the pressure dependent force, in which the control chamber is connected to said source of control signal pressure.

The valve member may comprise a valve stem surrounded by a hollow valve element having a through passage, the hollow valve element being slidable in a bore of a valve body, said bore extending between a chamber in communication with exhaust and a chamber in communication with a source of control signal, the valve stem having a first valve closure member movable into sealing engagement with a first valve seat provided on the hollow valve element to close the through passage therein and the hollow valve element having a second valve closure member which is movable into sealing engagement with a second valve seat to block communication between the control chamber and the source of said control signal.

A first biasing means may be provided to bias the hollow valve element for sealing engagement of the second valve closure member with the second valve seat.

A second resilient biasing means may be provided to bias the valve member in the same direction as the hollow element is biased by the first biasing means.

Stop means may be provided to limit movement of the valve member at a position to provide clearance between the first valve closure member and the first valve seat when the second valve closure member is in sealing engagement with the second valve seat.

The relay valve may comprise a valve body having a first chamber in which the electrically operable valve means is disposed, said first chamber being connected in communication with exhaust and the first chamber having a passage extending axially therefrom and the end thereof remote from the first chamber being in communication with a chamber which is in communication with a source of control signal, a (or the) hollow valve element being slidably and sealingly disposed within the said passage and a (or the) valve stem movable within and extending through the passage in the hollow valve element for axial movement relative thereto, the valve stem having a (or the) first valve closure member movable into sealing engagement with a (or the) first valve seat provided on the hollow valve element to close the passage in the hollow valve element and the hollow valve element having a (or the) second valve closure member which is movable into sealing engagement with a (or the) second valve seat to block communication between the control chamber and said chamber in communication with said source of control pressure.

According to another aspect of the invention, we provide a brake system incorporating a relay valve according to the first aspect of the invention.

The brake system may comprise an electronic control means to control supply of power to said electrically operable valve means, said electronic control means being responsive to incipient skid conditions of at least one wheel of a vehicle to modulate air pressure supplied by the main valve to a brake of a vehicle and said pneumatic control signal being responsive to driver demand.

The brake system may comprise an electronic control means to control supply of power to said electrically operable valve means, said electronic control means being responsive to driver demand to modulate air pressure supplied from said main valve to a brake of a vehicle in accordance with said driver demand and said pneumatic control signal being supplied from a source of pressure which may be unmodulated.

An embodiment of the invention will now be described by way of example with reference to the accompanying drawings wherein:
FIGURE 1 is a diagrammatic fragmentary illustration of a relay valve embodying the invention, and

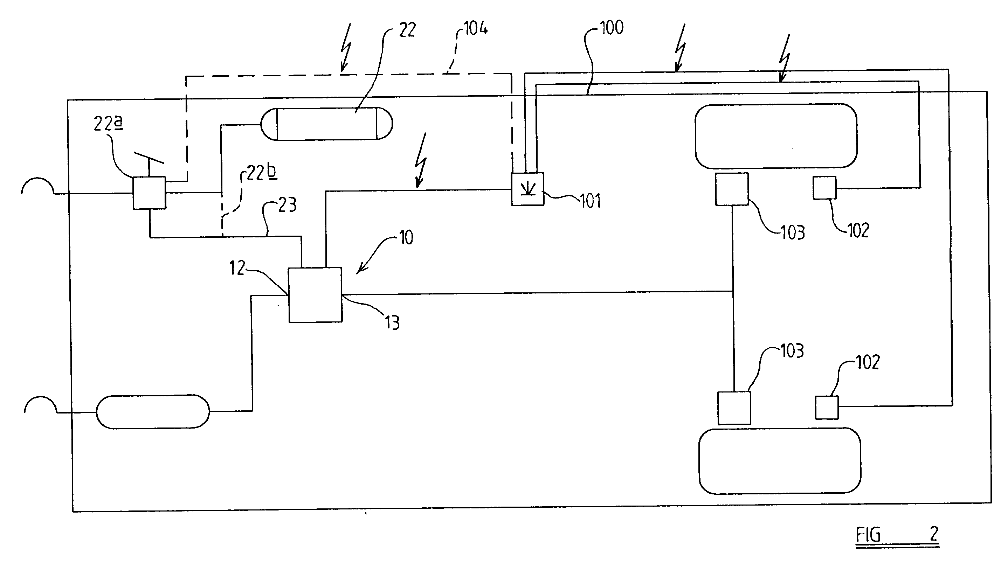

FIGURE 2 is a diagrammatic illustration of a vehicle having a brake system having a relay valve embodying the invention.

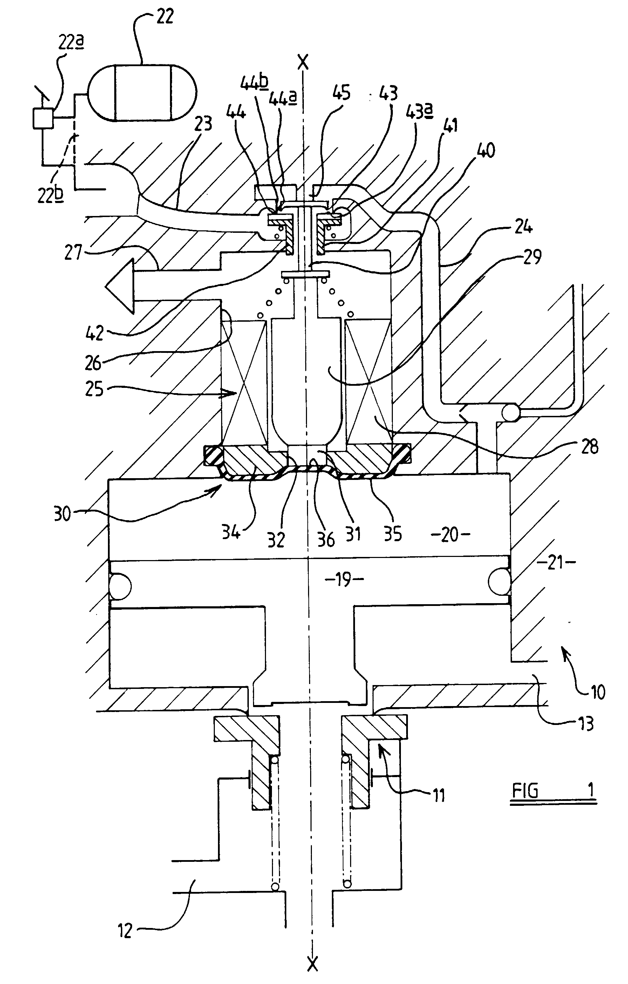

Referring to Figure 1, a relay valve 10 comprises a main valve 11 of conventional kind which controls flow of air from an inlet 12 to an outlet 13 so that the pressure of air at the outlet 13 is proportional to the pressure of control air fed into a control chamber 20 provided in the valve body 21 to act on a control piston 19 in conventional manner.

In this example the control pressure is fed to the chamber 20 from a reservoir 22 of air under pressure along a passage 23,24 controlled by an electrically operable valve means 25.

The valve means 25 is provided in a chamber 26, hereinafter referred to as a first chamber, provided in the valve body 21 and the chamber 26 is connected by a passage 27 to exhaust. In the present example exhaust is atmosphere but it may be any other relatively low pressure region.

The valve 25 comprises a solenoid valve having a coil 28 and an armature 29 which is slidable axially within the coil 28, i.e. in the direction of the axis X-X. The extent of movement of the armature 29 is proportional to the power supplied to the coil 28.

At its lower end the chamber 25 is sealed from communication with the control chamber 20 by a diaphragm 30 and a lower part 31 of the armature 29 extends through a passage 32 provided in an end member 34 disposed in the chamber 25 to guide the armature 29 for the above described axial movement. The diaphragm 30 has a surface 35 which is exposed to the pressure of control air in the control chamber 20 and an opposite surface 36 which is in force applying relationship with the lower part 31 of the armature 29. Accordingly the electro-magnetic force imposed on the armature 29 by the coil 28 is opposed by the fluid pressure dependent force acting on the lower end part 31 of the armature 29 through the intermediary of the diaphragm 30. The position adopted by the armature 29 is thus a position of balance between the electro-magnetic force and the fluid pressure dependent force.

The armature 29 carries at its upper end a valve stem 40 which is encircled by a hollow valve element 41 which is slidably and sealingly engaged in a passage 42 which extends between the first chamber 26 and the passage 23 which is in communication with the reservoir 22.

The valve stem 40 has a first valve closure member 43 disposed in the passage 24 and movable into sealing engagement, as a result of downward movement of the armature 29, with a first valve seat 43a provided on the hollow element 41.

The hollow element 41 also provides a second valve closure member 44, which encircles the first valve seat 43a and which is movable into sealing engagement with a second valve seat 44a provided at the mouth of a passage 44b which connects the passages 23, 24. A stop 45 is provided to limit movement of the armature 29 so as to provide a clearance between the first valve closure member 43 and the first valve seat 43a when the second valve closure member 44 is in sealing engagement with the second valve seat 44a.

In use, assuming, initially, no control signal has been supplied to the control chamber 20, when electrical power is supplied to the solenoid 25 to provide a control signal of a predetermined value, the armature 29 is initially moved downwardly to engage the first valve member 43 with the first valve seat 43a and then move the hollow member 40 downwardly to disengage the second valve member 44 from the second valve seat 44a so that air under pressure from the reservoir 22 can pass from passage 23 through passage 44b and via passage 24 into the control chamber 20.

As the pressure in the control chamber 20 increases it applies a fluid pressure dependent force to the lower end part 31 of the armature 29 by virtue of the pressure of the control air acting on the diaphragm 30 so as to oppose the electro-magnetic force applied to the armature by the coil 28. When the reaction force derived from the fluid pressure in the chamber 20 is slightly greater than the electro-magnetic pressure it causes the armature 29 to move upwardly and, initially, to bring the second valve member 44 into sealing engagement with the second valve seat 44a and thus block supply of further pressure into the control chamber 20 from the reservoir 22.

As a result, the control pressure 20 is held at a pressure which balances the electro-magnetic force which, in turn, is dependent upon the power fed to the solenoid. Of course, the power fed to the solenoid is determined by an appropriate control means at a predetermined level suitable for the brake pressure required to be fed to the brakes.

If the pressure in the chamber 20 overshoots the desired pressure, or if it is desired to reduce the control pressure, then the pressure dependent force acting on the armature 29 will be further greater than the electro-magnetic force so as to lift the first valve member 43 out of sealing engagement with the first valve seat 43a so as to connect the passage 24 to exhaust through the internal passage of the hollow member 40 and the exhaust passage 27 leading from the first chamber 26.

It will be noted that the solenoid 25 is disposed in the first chamber 26 which is connected to exhaust, in the present example to atmospheric pressure. In addition no seal is required between the valve stem 40 and the hollow valve element 41. Consequently, the need to provide a sliding seal between the valve stem 40 and any other part of the electrically operated valve is not required.

The only sliding seal required in the valve is one between the tubular valve element 41 and the wall of the passage 42 in the valve body. This single seal can be arranged to apply negligible frictional resistance to movement of the hollow valve element 41. It is particularly important to note that no sliding seal is required between the armature 29 and any other component since, if such a seal were required it would be a relatively large diameter and thus potentially provide a relatively large frictional resistance. This is to be contrasted with the relatively small diameter of the seal required between the passage 42 and the hollow valve element 41.

The diaphragm 30 is configured so as to provide negligible frictional resistance to movement of the solenoid 29.

The relay valve described hereinbefore may be used in any desired application. One application is in a pneumatic brake system for a vehicle 100, such as a trailer, where the solenoid 25 is operated by an electronic control means 101 in known manner in response to incipient skid conditions of one or more wheels of the vehicle, as detected by wheel speed sensor or sensors in known manner 102, so as to provide the vehicle with an anti-skid braking system. In this case air is fed from the reservoir 22 under the control of a driver brake pedal 22a into the passage 23. Normally the solenoid 25 is energised to provide communication between the passages 23 and 24 so that when the driver wishes to apply the brake, control signal air is fed to the control chamber 20 to apply conventional air brakes 103. If the electronic controller 101 detects an anti-skid condition the electronic controller de-energises the coil 28 so that the armature 29 moves upward under the bias of the spring 46 to disengage the first valve member 43 from the first valve seat 43a and thus connect the control chamber 20 to atmosphere. When in the ABS cycle, it is desired to increase the control pressure in a predetermined manner, the electronic controller sends an appropriate amount of power to the coil 28 to cause the armature to move downwardly and the valve functions as described hereinbefore so that the pressure in the chamber 20 follows the pressure demanded by the controller which is dependent upon the power fed to the coil 28.

In another alternative the vehicle may be provided with an electronic braking system, in which case the reservoir 22 is connected directly to the passage 23 as shown by the dotted line 22b and the driver brake pedal 22a, either directly or indirectly provides an electrical signal on line 104 provided only in this case to an electronic controller 101 dependent upon the brake pressure demanded by the driver. The electronic controller 101 causes an appropriate amount of power to be supplied to the coil 28 so as to cause the valve 25 to provide a control signal in the control chamber 20 which is dependent upon the brake pressure demanded by the driver. As a result the valve 10 supplies air from outlet 13 to the brakes 103.

If desired, the controller 101 may also be response to speed signals supplied from sensor(s) 102 so as to additionally provide ABS control.

The features disclosed in the foregoing description, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. A relay valve comprising a main valve responsive to the pressure of a pneumatic control signal in a control chamber of the main valve to supply air at a pressure which is dependent upon the pressure of the control signal and electrically operable valve means to control the pressure of the control signal.

2. A valve according to claim 1 wherein the electrically operable valve means controls the pressure of the control signal in proportion to the electrical power supplied to the electrically operable valve means.

3. A valve according to claim 1 or claim 2 wherein the electrically operable valve means comprises a valve member movable in response to an electro-magnetic force and said movement being opposed by a force dependent on the pressure of the control signal in the control chamber.

4. A valve according to claim 3 wherein the valve member is in force transmitting relationship with one side of a diaphragm, the other side of the diaphragm being in communication with the control signal.

5. A valve according to claim 4 wherein the other side of the diaphragm provides a part of a wall of the control chamber.

6. A valve according to any one of claims 3 to 5 wherein the valve member has an end surface to which said pressure dependent force is applied.

7. A valve according to any one of claims 3 to 6 wherein the valve member comprises an armature of a solenoid.

8. A valve according to claim 7 wherein the armature is movable axially relative to a coil of the solenoid within which the armature is slidably disposed.

9. A valve according to any one of claims 3 to 9 wherein movement of the valve member is adapted to control flow of control air from a source thereof to the control chamber and is adapted to control flow of control air from the control chamber to exhaust.

10. A valve according to any one of claims 3 to 9 wherein the valve member is movable between a first position, occupied when the electrically operable valve is de-energised or the pressure dependent force is greater than the electro-magnetic force, in which the control chamber is connected to exhaust, a second position, occupied when the electrically operated valve is energised and the electro-magnetic force is balanced by the pressure dependent force and in which the control chamber is isolated from exhaust and from a source of control signal pressure and a third position, occupied when the electro-magnetic force is greater than the pressure dependent force, in which the control chamber is connected to said source of control signal pressure.

11. A valve according to any one of claims 3 to 10 wherein the valve member comprises a valve stem surrounded by a hollow valve element having a through passage, the hollow valve element being slidable in a bore of a valve body, said bore extending between a chamber in communication with exhaust and a chamber in communication with a source of control signal, the valve stem having a first valve closure member movable into sealing engagement with a first valve seat provided on the hollow valve element to close the through passage therein and the hollow valve element having a second valve closure member which is movable into sealing engagement with a second valve seat to block communication between the control chamber and the source of said control signal.

12. A valve according to claim 11 wherein a first biasing means is provided to bias the hollow valve element for sealing engagement of the second valve closure member with the second valve seat.

13. A valve according to claim 12 wherein a second biasing means is provided to bias the valve member in the same direction as the hollow element is biased by the first biasing means.

14. A valve according to any one of claims 11 to 13 wherein stop means are provided to limit movement of the valve member at a position to provide clearance between the first valve closure member and the first valve seat when the second valve closure member is in sealing engagement with the second valve seat.

15. A valve according to any one of the preceding claims comprising a valve body having a first chamber in which the electrically operable valve means is disposed, said first chamber being connected in communication with exhaust and the first chamber having a passage extending axially therefrom and the end thereof remote from the first chamber being in communication with a chamber which is in communication with a source of control signal, a (or the) hollow valve element being slidably and sealingly disposed within the said passage and a (or the) valve stem being movable within and extending through the passage in the hollow valve element for axial movement relative thereto, the valve stem having a (or the) first valve closure member movable into sealing engagement with a first valve seat provided on the hollow valve element to close the through passage in the hollow valve element and the hollow valve element having a (or the) second valve closure member which is movable into sealing engagement with a (or the) second valve seat to block communication between the control chamber and said chamber in communication with said source of control signal.

16. A relay valve substantially as hereinbefore described with reference to the accompanying drawings.

17. A brake system incorporating a relay valve according to any one of the preceding claims.

18. A brake system according to claim 17 wherein the brake system comprises an electronic control means to control supply of power to said electrically operable valve means, said electronic control means being responsive to incipient skid conditions of at least one wheel of a vehicle to modulate air pressure supplied by the main valve to a brake of a vehicle and said pneumatic control signal being responsive to driver demand.

19. A brake system according to claim 17 wherein the brake system comprises an electronic control means to control supply of power to said electrically operable valve means, said electronic control means being responsive to driver demand to modulate air pressure supplied from said main valve to a brake of a vehicle in accordance with said driver demand and said pneumatic control signal being supplied from a source of pressure which may be unmodulated.
